# EUROPÄISCHE PATENTSCHRIFT

(11) **EP 3 243 598 B1**
(45) Veröffentlichungstag und Bekanntmachung des Hinweises auf die Patenterteilung: **10.06.2020**
(21) Anmeldenummer: 17000584.7
(22) Anmeldetag: 06.04.2017
(51) Int. Cl.: B23K 26/32, B21C 37/26, B23K 26/302, B23K 101/08, B23K 103/10, B23K 103/12

(54) **VERFAHREN ZUR HERSTELLUNG EINES RIPPENROHRES UNTER EINSATZ EINES LASERSTRAHLES UND ENTSPRECHENDES RIPPENROHR**
METHOD OF PRODUCING A FINNED TUBE USING A LASER BEAM AND CORRESPONDING FINNED TUBE
PROCÉDÉ DE FABRICATION D'UN TUBE À AILETTES EN UTILISANT UN FAISCEAU LASER ET TUBE À AILETTES CORRESPONDANT

(30) Priorität: 11.07.2016 DE 102016008344; 18.04.2016 DE 102016004501
(43) Veröffentlichungstag der Anmeldung: 15.11.2017
(73) Patentinhaber: Schmöle GmbH, 58730 Fröndenberg (DE)
(72) Erfinder: SCHMIDT, Martin, 58730 Fröndenberg (DE); HÖPPE, Arnold, 58739 Wickede (DE); WAGNER, Thomas, 58739 Wickede (DE); KRAMER, Frank, 59427 Unna (DE); FRANKE, Christian, 58710 Menden (DE)
(74) Vertreter: Roche, von Westernhagen & Ehresmann

(56) Entgegenhaltungen:
- EP-B1- 0 819 497
- WO-A1-00/38854
- US-A1- 2013 171 467
- US-A1- 2014 311 181
- US-A1- 2016 001 403
- US-B1- 6 554 854

## Beschreibung

Die Erfindung betrifft ein Verfahren zur Herstellung eines Rippenrohres und ein Rippenrohr gemäß dem Oberbergriff der Ansprüche 1 und 9 (siehe z.B. EP 0 819 497 B1).

Aus dem Stand der Technik sind derartige Rippenrohre hinlänglich bekannt. Typischerweise werden Edelstahlrohre mit einem Edelstahlband berippt. Der Berippungsvorgang erfolgt dabei durch ein Verschweissen mit Hilfe eines CO₂-Lasers.

Allerdings besteht das stete Bestreben, derartige Rohre weiter zu verbessern. Insbesondere schlägt die EP 0 819 497 B1 vor, eine Rippe aus Kupfer zu verwenden, welche an einem Edelstahlrohr angebracht wird. Die Rippe aus Kupfer weist hierbei den Vorteil einer hohen Wärmeleitfähigkeit auf. Besagtes Dokument des Standes der Technik schlägt vor, die Oberfläche des Edelstahl-Rohrgrundkörpers mit Hilfe des CO₂-Lasers zu bestrahlen, aufzuschmelzen und das Kupferband dann (zur Festlegung an dem Rohrgrundkörper) in das am Rohrgrundkörper erzeugte "Bad" einzutauchen. Durch den Abkühlungsvorgang des Bades wird das unaufgeschmolzene Band am Rohrgrundkörper gehalten.

Auch wenn sich dieses Verfahren grundsätzlich als vorteilhaft herausgestellt hat, so ist es doch wünschenswert, eine noch sicherere Anbringung eines Bandes mit hoher Wärmeleitfähigkeit an einem Rohrgrundkörper zur Herstellung eines Rippenrohres zu erreichen.

Die vorliegende Erfindung löst diese Aufgabe mit einem Verfahren gemäß Patentanspruch 1 und ist durch die folgenden Verfahrensschritte gekennzeichnet:
- Bereitstellen eines Rohrgrundkörpers aus einem ersten Werkstoff sowie eines Bandes aus einem zweiten, anderen Werkstoff,
- Abgleich mindestens einer spektralen Eigenschaft, beispielsweise des Absorptionskoeffizienten, der beiden unterschiedlichen Werkstoffe,
- Auswahl eines Lasertyps einer geeigneten Wellenlänge unter Berücksichtigung des vorgenommenen Abgleichs,
- Einstrahlen eines von einem Laser des ausgewählten Typs erzeugten Laserstrahls in den Kontaktbereich von Rohrgrundkörper und Band, derart, dass zum Verschweißen sowohl dem Kontaktbereich zugeordnetes Rohrgrundkörpermaterial als auch dem Kontaktbereich zugeordnetes Bandmaterial von dem Laserstrahl bestrahlt und aufgeschmolzen wird.

Mit anderen Worten wird es ermöglicht, einen Lasertypen je nach eingesetztem Material von Band und Rohrgrundkörper auszuwählen. Hierbei weisen Band und Rohrgrundkörper ein unterschiedliches Material auf. Bei beiden Materialien werden die spektralen Eigenschaften in dem Sinne verglichen, dass beispielsweise geprüft wird, in welchem Wellenlängenbereich der Absorptionskoeffizient des Materials besonders hoch ist oder die Summe aus Reflexionskoeffizient und Transmissionskoeffizient besonders niedrig. Eine solche Überprüfung wird für beide Materialien durchgeführt und es werden dann die entsprechenden Bereiche abgeglichen, um zu überprüfen, welcher Wellenlängenbereich sich besonders eignet, da beide Materialien hinreichend berücksichtigt werden. Je nach geeignetem Wellenlängenbereich kann dann ein entsprechender Lasertyp ausgesucht und eingesetzt werden. Mit diesem Laser kann dann auf die oben beschriebene Weise ein ordentlicher Schweissvorgang erfolgen, in dem Sinne, dass der gesamte Kontaktbereich bestrahlt wird.

Eine vorteilhafte Ausgestaltung umfasst folgende Schritte:
- Bereitstellen des Rohrgrundkörpers, insbesondere aus Kupfer oder Aluminium, sowie des Bandes aus Kupfer oder Aluminium,
- Einsetzen eines Faserlasers zur Erzeugung des Laserstrahls,
- Einstrahlen eines von dem Faserlaser erzeugten Laserstrahls in den Kontaktbereich von Rohrgrundkörper und dem aus Kupfer oder Aluminium bestehenden Band, derart, dass zum Verschweißen sowohl dem Kontaktbereich zugeordnetes Rohrgrundkörpermaterial als auch dem Kontaktbereich zugeordnetes Bandmaterial von dem Laserstrahl bestrahlt und aufgeschmolzen wird.

Mit anderen Worten besteht die Idee der vorteilhaften Ausgestaltung - im Gegensatz zu dem zuletzt genannten Stand der Technik - darin, das aus Kupfer/Aluminium bestehende Band mit hoher Wärmeleitfähigkeit nicht einfach passiv in ein am Rohrgrundkörper erzeugtes Schweissbad einzutauchen, sondern vielmehr darin, auch das Band anzuschmelzen. Die Erfindung erkennt hierbei, dass dies mit einem Faserlaser überhaupt erst möglich wird.

Mit dem aus dem Stand der Technik bekannten CO₂-Laser ist das Anschmelzen eines Kupferbandes nicht möglich, da die spektralen Eigenschaften dieses Materials nicht zu der Wellenlänge eines CO₂-Lasers (von beispielsweise etwa 10,6 µm) passen. Mit anderen Worten kann der Großteil der CO₂-Laserstrahlung überhaupt nicht in die Oberfläche von Kupfer eindringen, sondern wird reflektiert, so dass ein Aufschmelzen mit einem CO₂-Laser auch nicht möglich ist. Insbesondere weisen CO₂-Laser in ihrem Inneren sogar Spiegel aus Kupfer auf, da Kupfer hinsichtlich der Wellenlänge eines CO₂-Lasers eben besonders gute Reflexionseigenschaften und besonders schlechte Absorptionseigenschaften aufweist.

Die Anmelderin hat erkannt, dass es möglich ist, einen Faserlaser einzusetzen, welcher eine andere Wellenlänge aufweist (nämlich eine etwa 10-fach kleinere Wellenlänge von beispielsweise 1,06 µm). In diesem Wellenlängenbereich wird der Faserlaserstrahl somit nicht mehr in störendem Maße von der Kupferoberfläche reflektiert, sondern kann von dem Material im Wesentlichen absorbiert werden, wodurch ein Aufschmelzen (und somit ein Verschweissvorgang), auch bei Kupfer- oder Aluminiumbändern ermöglicht wird.

Zwar ist der Einsatz eines Faserlasers zum Verschweissen eines Rippenrohrs aus dem Kraftwerksbau - z.B. aus der WO 2009/075596 A2 - grundsätzlich bekannt. Dort wird dieser aber lediglich zum Verschweissen eines herkömmlichen C-Stahlbandes an einem C-Stahlrohr (Material S235GH-Stahl) verwendet, offensichtlich auch lediglich aufgrund seiner besonders hohen Leistung von 10 kW. Besagte Druckschrift lehrt dann gerade auch lediglich die Rippen anzuschmelzen und gerade nicht das Rohr, selbst bei einer I-Form der Rippe, während bei einer ebenfalls offenbarten U-Form oder L-Form ohnehin lediglich auf die Oberseite der Rippe (und somit gerade nicht auf den Rohrgrundkörper) eingestrahlt wird. Im Kraftwerksbau werden ohnehin nur breite Rippen mit einer Mindestdicke von 0,8 mm (typischerweise mehr) eingesetzt.

Aus der US 2016/001403 A1 ist der Einsatz eines Faserlasers bei dem Verschweißen von überlappendem Aluminium- und Stahlplatten bekannt, und zwar unter Einsatz von Flussmittel und sehr genau definierten Fillern. Auch die US 2014/311181 A1 offenbart den Einsatz von Faserlasern, und zwar zum Verbinden von rippenlosen Aluminium-Kapillarrohren an in Durchmesser größeren Saugrohren, welche dann gemeinsam als Wärmetauschelemente in Kühlschränken einsetzbar sind. Beide letztgenannten Dokumente des Standes der Technik beschäftigen sich aber überhaupt nicht mit Rippen an Rohren. Rippen an Rohren sind hingegen aus der WO 00/38854 A1 bekannt. Bei den dort offebarten Rippenrohren handelt es sich allerdings nicht um materialeinheitliche Rippenrohre, da ein Rohrgrundkörper aus Stahl mit einem Überzug aus Aluminium versehen wird. Der Einsatz eines Faserlasers ist aber nicht offenbart.

Erst die vorliegende Ausführung ermöglicht somit ein Verfahren zur Bereitstellung eines Rippenrohres mit - insbesondere schmalen - Rippen aus Kupfer oder Aluminium, deren Wärmeleitfähigkeit besonders geeignet ist für den Einsatz in Wärmetauschern. Kupfer besitzt eine Wärmeleitfähigkeit von 350 bis 400 W/mK, Aluminium von etwa 200 W/mK, während beispielsweise Edelstahl oder C-Stahl eine vielfach geringere Wärmeleitfähigkeit von unter 65 W/mk oder sogar unter 50 W/mK aufweisen.

Im Gegensatz zu dem eingangs genannten Stand der Technik, bei welchem bereits Kupferbänder eingesetzt wurden, ermöglicht die vorliegende Ausführung eine viel festere Art der Verbindung, da nicht lediglich ein "Materialbad" am Rohrgrundkörper erschaffen wird, sondern vielmehr ein Plasma aus Rohrgrundkörper- und Bandmaterial. Hierbei handelt es sich um einen "echten" Verschweissvorgang, welcher bei der gewählten Laser- und Materialkonstellation insbesondere keines Zusatzwerkstoffes bedarf.

Gemäß der Ausführung wird der Faserlaserstrahl also in den Kontaktbereich zwischen Rohrgrundkörper und dem aus Kupfer oder Aluminium bestehenden Band eingestrahlt. Er bestrahlt sowohl Teile des Rohrgrundkörpers als auch des Bandes (nämlich zum teilweisen Aufschmelzen beider Körper zur Erzeugung des besagten Schweissplasmas). Der bestrahlte Kontaktbereich aus Rohrgrundkörperabschnitt und Bandabschnitt kann hierbei (insbesondere bei rechteckigem Bandquerschnitt) eine L-Form aufweisen.

Vorteilhafterweise besteht auch der Rohrgrundkörper aus Kupfer oder Aluminium. Grundsätzlich ist es aber auch möglich, ein entsprechendes Kupfer- oder Aluminiumband mit einem Rohrgrundkörper eines anderen Materials, wie beispielsweise Edelstahl (je nach Einsatzfall), zu verschweissen. Der Faserlaser besitzt in der Regel die geeignete Wellenlänge, um auch entsprechende Rohrgrundkörper aufzuschmelzen.

Durch den beschriebenen Verschweissvorgang wird die Erzeugung einer durchgehenden Schweissnaht im Kontaktbereich zwischen Rohrgrundkörper und Band möglich.

Typischerweise liegt das Bandmaterial in einer Endlos-Form (beispielsweise einer Rolle oder Ähnlichem) vor und wird an den Rohrgrundkörper herangeführt, welcher typischerweise rotierend aufgehängt ist. Der Rohrgrundkörper kann das Band während des Berippungsvorgangs also mitnehmen, derart, dass das Band, insbesondere unter Zug, im Wesentlichen wendelförmig an dem Rohrgrundkörper angelegt und dort von dem Faserlaser verschweisst wird.

Nach Fertigstellung der Schweissnaht kann das gesamte Rippenrohr dann in seine endgültige Form, beispielsweise eine Wendelform oder auch eine Ω-Form, überführt werden. Dies wird mit dem vorliegenden Verfahren überhaupt erst möglich, da sich herausgestellt hat, dass die oben beschriebenen Verfahren des Standes der Technik zu einer Befestigung des Kupferbandes an dem Rohrgrundkörper führen, welche für einen anschließenden Biege- oder Formprozess des Rippenrohres nicht hinreichend ist.

Vorliegend wird ein Faserlaser eingesetzt, welcher beispielsweise die oben bereits genannte Wellenlänge aufweisen kann. Bei einem Faserlaser handelt es sich um eine spezielle Form des Festkörperlasers, bei welchem der dotierte Kern einer Glasfaser das aktive Medium bildet. Im Wesentlichen handelt es sich dabei um einen Glaslaser mit Lichtwellenleiter-Eigenschaften. Die Laserstrahlung erfährt durch die Leitung in der laseraktiven Faser grundsätzlich eine sehr hohe Verstärkung. Zudem sind die flexiblen Lichtwellenleiter-Eigenschaften besonders gut geeignet, den Strahl des Faserlasers auf den Kontaktbereich zwischen Rohrgrundkörper und Band zu justieren. Faserlaser können im Allgemeinen optisch gepumpt werden, beispielsweise indem parallel zum Faserkern Strahlung von Dioden-Lasern eingekoppelt wird (in dessen Mantel oder in diesen selbst).

Der Faserlaser kann den Kontaktbereich derart bestrahlen, dass das aus Kupfer oder Aluminium bestehende Band mit einer Seite, insbesondere mit einer unteren Schmalseite (bei einem rechteckigen Querschnitt) umlaufend an dem Rohrgrundkörper festgelegt und verschweisst wird. Es kann sich hierbei typischerweise um ein durchgehend homogenes, unterbrechungsfreies Band handeln, welches insbesondere wendelförmig auf dem Rohrgrundkörper verschweisst und verrippt wird.

Bei dem Rohrgrundkörper handelt es sich im Wesentlichen um ein Rundrohr einer gewünschten Länge, welches während des Berippungsvorganges typischerweise in einer geraden Form vorliegt. Der Rohrgrundkörper kann während des Berippungsvorganges insbesondere rotieren, wozu er beispielsweise an seinen Enden eingespannt oder auf einen Dorn aufgebracht sein kann. Das Band kann hierbei typischerweise quer zur Richtung der Längserstreckung des Rohrgrundkörpers (also tangential) an den Rohrgrundkörper herangeführt werden.

Die Bevorratung des Bandes (beispielsweise in Form einer Rolle oder eines Tellers) kann hierbei etwas unterhalb der Halterungsebene des Rohrgrundkörpers angeordnet sein, so dass das Band nicht waagerecht, sondern in einem gewissen Winkel zur Waagerechten von unterhalb auf das Rohr zuläuft. Dies ermöglicht eine besonders vorteilhafte Anpassung des Drucks bzw. des Zugs bei Kontakt des Bandes mit dem Rohrgrundkörper. Typischerweise umläuft das Band dann zunächst einen gewissen Winkel gemeinsam mit dem rotierenden Rohrgrundkörper, bevor der Faserlaser das Band an dem Rohrgrundkörper verschweisst.

Im Gegensatz zu dem aus dem Stand der Technik bekannten Faserlaser mit einer Leistung von 10 kW setzt die Anmelderin jedenfalls bisher Faserlaser mit einer geringeren Leistung von weniger als 5 kW ein, um einen zu tiefen "Einbrand" im Kontaktbereich von Band und Rohrgrundkörper zu vermeiden. Allerdings kann bei einer höheren Berippungsgeschwindigkeit (also im Wesentlichen der Axial- und Rotationsgeschwindigkeit des Rohrgrundkörpers) auch ein Faserlaser mit einer höheren Leistung gewählt werden. Es muss jedenfalls darauf geachtet werden, dass ein zu tiefer "Einbrand" vermieden wird, welcher das Material im Bereich des Kontaktbereiches angreifbar macht, beispielsweise durch Schwächung,Korrosion oder Ähnliches.

Das für einen Einsatz in einem Wärmetauscher verwendete Band des Rippenrohres weist typischerweise eine Dicke von weniger als 1 mm, vorzugsweise von weniger als 0,8 mm und weiter vorzugsweise von weniger als 0,5 mm, auf (was eine Abgrenzung zu den sehr dicken Bändern des Kraftwerksbaus von 1 bis 2,5 mm darstellt).

Die Höhe einer Rippe, und somit die Höhe des Bandes, kann mit dem vorliegenden Verfahren besonders groß gewählt werden. In diesem Sinne sind auch Rippenhöhen von bis zu 32 mm, jedenfalls 20 mm oder jedenfalls von mehr als 10 mm möglich, selbst mit dem Material Kupfer oder Aluminium. Erst der erfindungsgemäße, sichere Verschweissvorgang mit einem Faserlaser und einem beidseitigen Aufschmelzen ermöglicht diese Rippenhöhen. Die Rippenhöhe kann somit in Extremfällen sogar etwa dem Rohrdurchmesser des verwendeten Rohrgrundkörpers entsprechen (beispielsweise bei einem Rohrdurchmesser von 20 mm oder Ähnlichem).

Erfindungsgemäß besteht das Band aus Kupfer oder Aluminium. Insbesondere handelt es sich dabei um im Wesentlichen reine Kupfer- oder Aluminiumrohre, also nicht um Kupferlegierungen oder Aluminiumlegierungen.

Gleiches kann für die eingesetzten Rohrgrundkörper gelten, welche vorteilhafterweise auch aus im Wesentlichen reinem Kupfer oder Aluminium bestehen können (also nicht aus Legierungen).

Rohrgrundkörper können - je nach Anwendung - völlig unterschiedliche Durchmesser von beispielsweise zwischen 5 und 150 mm aufweisen.

Gemäß einer besonders vorteilhaften Ausgestaltung der Erfindung bestehen der Rohrgrundkörper und das Band aus demselben Material. Mit anderen Worten ist das fertiggestellte Rippenrohr materialeinheitlich ausgebildet. Da das Band erfindungsgemäß aus Kupfer oder Aluminium besteht, besteht das Rippenrohr demnach ebenfalls vollständig materialeinheitlich aus Kupfer oder aus Aluminium. Hiermit werden erstmalig materialeinheitliche Rippenrohre aus Kupfer oder Aluminium ermöglicht.

Gemäß einer weiteren, besonders vorteilhaften Ausgestaltung der Erfindung ist das Band streifenartig ausgebildet, liegt also zunächst in Streifenform vor. Desweiteren ist es vorteilhaft, wenn der Querschnitt I-förmig ausgebildet ist, also im Querschnitt im Wesentlichen eine Rechteckform aufweist. Eine solche I-Form weist der Streifen in Abgrenzung zu einer U-Form oder einer L-Form auf. Eine im Querschnitt I-förmige Ausgestaltung einer Rippe bietet den Vorteil einer optimalen Wärmeleitung und ermöglicht den Einsatz von weniger Rippenwerkstoff.

Gemäß einer besonders vorteilhaften Ausgestaltung der Erfindung ist ein Einstrahlen eines Vorstrahls in den Kontaktbereich zwischen Rippe bzw. Band und Grundkörper vorgesehen. Ein derartiger, von dem eigentlichen Laserstrahl gesonderter Vorstrahl wird typischerweise von demselben Lasergerät erzeugt, wie der eigentliche Laserstrahl. Ein solcher Vorstrahl kann insbesondere zum Anwärmen des Kontaktbereichs dienen und in den gerade zu verschweissenden Abschnitt des Kontaktbereichs zeitlich vor dem eigentlichen Laserstrahl einstrahlen. In der Praxis hat sich eine derartige Zweischritt-Lösung des Bestrahlungs- oder Schweissvorgangs als besonders vorteilhaft herausgestellt. Der Faserlaser kann hierzu zwei gesonderte Strahlen entweder separat erzeugen oder typischer- und vorteilhafterweise als sogenannten Twinspot, bei welchem aus einem Grundstrahl sowohl der Vorstrahl als auch der eigentliche Laserstrahl herausgearbeitet werden. In der Regel fallen Laserstrahl und Vorstrahl im Wesentlichen parallel auf den Kontaktbereich. Dieser Verfahrensschritt ermöglicht eine besonders vorteilhafte Vorbereitung des Kontaktbereiches und ermöglicht einen "schonenden" Verschweissvorgang.

Erfindungsgemäß kann besonders vorteilhaft vorgesehen sein, dass dem bestrahlten Kontaktbereich ein Kühlgas zugeleitet wird. Die Zuleitung eines Gases ist aus dem Stand der Technik zwar hinlänglich bekannt, doch dient ein solches Gas bei bisherigen Bandmaterialien, wie bei einem herkömmlichen Edelstahl, im Wesentlichen als Schutzgas und soll einen Korrosionsangriff verhindern. Gemäß der Erfindung wird vorliegend aber ein Kühlgas eingesetzt, welches bei den eingesetzten Materialien Kupfer und Aluminium, aufgrund deren jeweils besonders hoher Wärmeleitfähigkeit bzw. dem jeweils niedrigen Schmelzpunkt, von enormer Wichtigkeit ist.

Das Kühlgas kann hierbei eine Konvektion erzwingen, insbesondere auf den Materialien des Kontaktbereiches. Bei herkömmlichem Stahl ist - aufgrund dessen geringer Wärmeleitfähigkeit bzw. einer hohen Schmelztemperatur - eine derartige Kühlung überhaupt nicht notwendig.

Zudem kann das Kühlgas auch noch einen zweiten Effekt, nämlich einen Schutzeffekt aufweisen, in dem Sinne, dass es Oxidation oder Korrosion verhindert oder entgegenwirkt.

Vorteilhafterweise erfolgt der Schweissvorgang ohne einen Schweisszusatzwerkstoff. Ein derartiger Schweisszusatzwerkstoff, wie beispielsweise ein Schweissdraht oder Ähnliches, kann vorliegend durch die besonders gute Schweisswirkung des Faserlasers im Verhältnis zu den eingesetzten Materialien, insbesondere Kupfer oder Aluminium, überflüssig sein. Das Schweissen erfolgt somit im Wesentlichen zusatzwerkstofffrei.

Außerdem oder alternativ kann eine durchgängige Schweissnaht zwischen dem Rohrgrundkörper und dem Band, also in dem Kontaktbereich, erzeugt werden. Eine durchgängige Schweissnaht - im Gegensatz zu einer nur punktuellen Schweissnaht oder Ähnlichem - weist hierbei den Vorteil einer besonders stabilen Ausführungsform des entstehenden Rippenrohres auf.

Bei dem erfindungsgemäßen Verfahren hat es sich als besonders vorteilhaft herausgestellt, dass das Band vor der Bestrahlung durch den Laserstrahl über einen gewissen Umfangswinkel mit dem Rohrgrundkörper in Kontakt steht. Mit anderen Worten wird das Band nicht bereits in dem Moment verschweisst, wenn es an den Rohrgrundkörper herangeführt wird und diesen erstmalig kontaktiert. Vielmehr kann das Band erst einmal an den Rohrgrundkörper herangezogen werden. Hierzu kann es insbesondere unter Zug stehen, indem es um den Rohrgrundkörper beaufschlagend herumgeführt wird.

Ist ein idealer Zug- oder Druckpunkt erreicht, kann der eigentliche Verschweissvorgang erfolgen und der Laserstrahl in den Kontaktbereich einstrahlen. Es hat sich hierbei herausgestellt, dass sich ein Umfangswinkel von mindestens 30 Grad besonders gut eignet, weiter vorzugsweise sollte dieser mindestens 70 Grad umfassen. Gemäß einer besonders vorteilhaften Ausführungsform ist ein Umfangswinkel von zwischen 80 und 100 Grad vorgesehen.

Typischerweise ist ein derartiger Umfangswinkel aber doch kleiner als 180 Grad, insbesondere 100 Grad, weiter insbesondere auch als 90 Grad. Hierbei ist typischerweise eine Ausbildung vorgesehen, bei welcher der Rohrgrundkörper gedreht wird bzw. rotiert. Das Band kann dabei typischerweise mit derselben Geschwindigkeit, mit welcher der Rohrgrundkörper rotiert, auf den Rohrgrundkörper auflaufen, so dass beim Auflaufen ein Kontaktbereich entsteht, welcher sich auch nicht mehr verschiebt und welcher nach Umlaufen des vorgegebenen Umfangwinkels dann von dem Laser bestrahlt werden kann (zur Durchführung des Schweissvorganges).

Gemäß einer besonders vorteilhaften Ausführungsform des erfindungsgemäßen Verfahrens wird der Rohrgrundkörper mit dem daran verschweissten Band, also im Wesentlichen das vorbereitete Rippenrohr, schließlich in eine gewünschte Endform verformt. Hierbei kann es sich typischerweise um eine Wendelform handeln, was also zu einem Rippenrohr in Wendelform führt. Diese Form ist besonders beliebt beim Einsatz in Wärmetauschern.

In einem alternativen Ausführungsbeispiel kann das Rippenrohr auch eine Ω-Form einnehmen, beispielsweise für den Fall, dass es für eine Motorkühlung eingesetzt wird. Es kann hierbei durch die Ω-Form eine Seite des Motors umgreifen. Auf der anderen Seite des Motors können dann gegenüberliegende Rippenrohre derselben Form, welche aber um 180 Grad gedreht sind, den Motor in die gegenläufige Richtung umgreifen.

Weitere, in den Zeichnungen nicht dargestellte Ausführungsbeispiele kommen als Rippenrohre in Form von Haarnadeln (schmale U-Form), Rippenrohrmäandern (im Wesentlichen in einer Ebene), spiralförmigen Rippenrohren (ebenfalls im Wesentlichen in einer Ebene) oder in Form konischer Wendel vor. Die Erfindung umfasst aber jedoch sämtliche vorstellbaren 3D-Geometrien von Rippenrohren.

Sämtliche Formen werden allerdings erst durch die vorteilhafte Ausgestaltung des erfindungsgemäßen Verfahrens, mit Hilfe eines Faserlasers ein Kupfer- oder Aluminiumband zu verschweissen, ermöglicht. Bei den aus dem Stand der Technik bekannten Verfahren, bei welchen ein Kupferband lediglich in eine Schmelze am Rohrgrundkörper eingetaucht wird, sind derartige Formen in der Regel überhaupt noch gar nicht möglich, und zwar aus Stabilitätsgründen.

Ein erfindungsgemäßes Rippenrohr gemäß Patentanspruch 9 kann insbesondere durch eines der beschriebenen Verfahren hergestellt werden. Alle im Zusammenhang mit einem derartigen Verfahren bisher vorgestellten Vorteile und Ausführungen sollen nicht explizit für den Anspruch 9 wiederholt werden, für diesen aber gleichfalls gelten. Bei dem hergestellten Rippenrohr kann es sich also beispielsweise um ein Rippenrohr in Wendelform oder Ω-Form handeln. Das Band kann insbesondere eine I-Form aufweisen und Ähnliches.

Weitere Vorteile der Erfindung ergeben sich aus den gegebenenfalls nicht zitierten Unteransprüchen sowie aus der nun folgenden Figurenbeschreibung.

Darin zeigen
- Fig. 1: in einer sehr schematischen, teilgeschnittenen Seitenansicht ein erfindungsgemäßes Rippenrohr in einer geraden oder noch ungeformten Ausführung,
- Fig. 2: einen ebenfalls schematischen, vergrößerten Ausschnitt eines erfindungsgemäßen Rippenrohres unter Darstellung einer einzelnen Rippe,
- Fig. 3: der Abschnitt gemäß Kreis III in Fig. 2 in vergrößerter Darstellung unter Hinzufügung einer weiteren, noch nicht verschweißten Rippe, links von der in Fig. 2 dargestellten, bereits befestigten Rippe,
- Fig. 4: in einer sehr schematischen, perspektivischen Unteransicht der Aufwicklungsprozess eines Bandes auf einen Rohrgrundkörper,
- Fig. 5: in einer Ansicht etwa gemäß Ansichtspfeil V in Fig. 4 eine frontale, geschnittene Ansicht des Rohrgrundkörpers samt Bandes und angedeutetem Laser in einer sehr schematischen Darstellung,
- Fig. 6: eine ebenfalls sehr schematische, vergrößerte Darstellung des in Fig. 5 mit dem Vergrößerungspfeil VI angedeuteten Kontaktbereiches zwischen Rohrgrundkörper und Band,
- Fig. 7: zwei Graphendarstellungen, welche spektrale Eigenschaften zweier unterschiedlicher Materialien darstellen, wobei jeweils in einer sehr schematischen Darstellung der Absorptionskoeffizient α gegenüber der Wellenlänge λ dargestellt ist,
- Fig. 8: eine schematische Ansicht eines in eine Wendelform überführten Rippenrohres und
- Fig. 9: eine schematische, teilgeschnittene Ansicht eines Motors mit ihn umgebenden, in eine Ω-Form überführten Rippenrohren.

Der nachfolgenden Figurenbeschreibung sei vorangestellt, dass gleiche oder vergleichbare Teile gegebenenfalls mit identischen Bezugszeichen versehen sind, teilweise unter Hinzufügung kleiner Buchtstaben oder von Apostrophs.

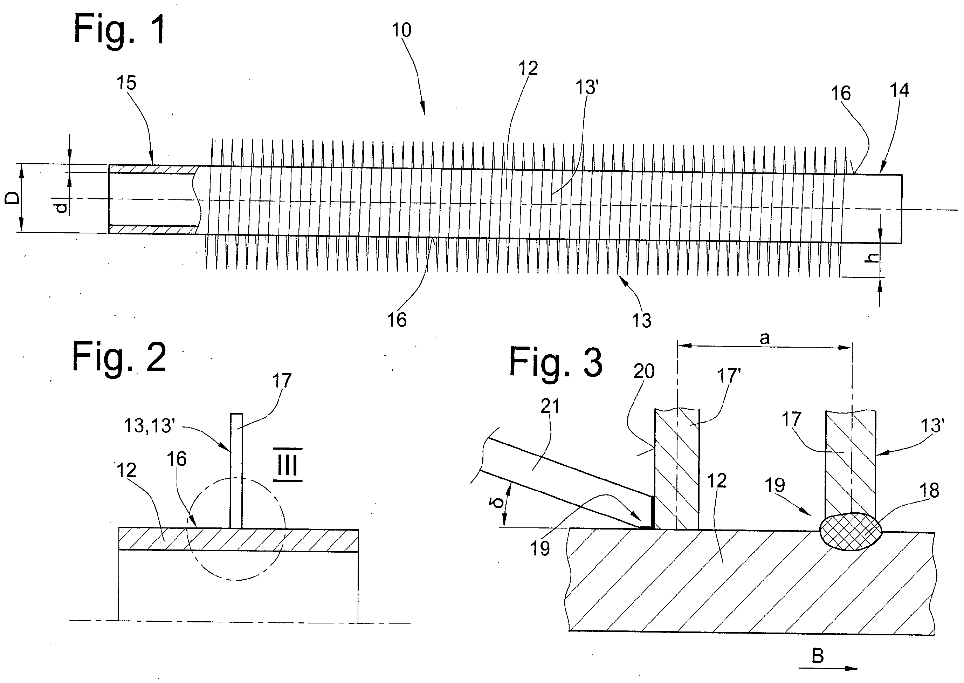

Fig. 1 zeigt zunächst ein bereits fertig gestelltes Rippenrohr 10, welches dem Grunde nach aus zwei separaten Stücken hergestellt worden ist: So ist zunächst ein Rohrgrundkörper 12 vorgesehen, welcher als gerades Rundrohr ausgebildet ist. Um den Grundkörper 12 ist ein Kupferband 13 (alternativ ein Aluminiumband) wendelförmig gewickelt und an dem Rohrgrundkörper 12 verschweisst. Das Band 13 bildet hierdurch also eine endlose Rippe 13' aus (wobei die Rippe 13' natürlich tatsächlich eine endliche, festgelegte Länge aufweist; die Rippe 13 ist mit anderen Worten durchgängig ausgebildet).

Das Band 13 lässt ausweislich Fig. 1 die Enden 14 und 15 des Rohrgrundkörpers 12 freistehen und ist an der Oberfläche 16 des Rohrgrundkörpers 12 verschweisst. Dieser ist, wie bereits erwähnt und insbesondere an dem linken Ende 15 des Rohrgrundkörpers in der teiltransparenten Darstellung ersichtlich, hohl ausgebildet mit einer Wandstärke d und einem Durchmesser D. Die Rippe 13' weist hierbei eine Rippenhöhe h auf.

Der mittlere Abstand a zwischen zwei benachbarten Rippenabschnitten kann aufgrund der Erfindung besonders groß ausgebildet werden (jedenfalls im Vergleich zu einer herkömmlichen CO₂-Verschweissung an Edelstahl). Beispielsweise kann ein mittlerer Abstand a von bis zu sechs Millimeter erreicht werden (bzw. eine Steigung von weniger als fünf Rippen/Zoll). Insbesondere kann eine Steigung von zwischen 5 bis 13 Rippen/Zoll erreicht werden (was einem mittleren Abstand a von zwischen etwa 2 und 5 mm entspricht).

Das erfindungsgemäße Verfahren kann zudem bei einer variablen Beabstandung der Rippenabschnitte an dem Rohr eingesetzt werden (bzw. bei einer variablen Steigung an einem Rohr). Hierzu kann die Vorschub- und/oder die Rotationsgeschwindigkeit des Rohres variiert werden. Die größten Abschnitte a zwischen benachbarten Rippenabschnitten können hierbei beispielsweise die oben angegebenen Werte annehmen. Grundsätzlich können die Abstände jedoch auch sehr viel kleiner sein als oben angegeben, unabhängig davon, ob eine variable Beabstandung vorgesehen wird oder nicht.

Das erfindungsgemäße Herstellungsverfahren für das Rippenrohr 10 wird nun anhand der Figuren 2 bis 6 näher erläutert werden.

Hierbei zeigt Fig. 2 zunächst in einer rein schematischen, teilgeschnittenen Darstellung die vergrößerte Einzeldarstellung eines bereits verschweissten Abschnittes 17 der Rippe 13'. Die Rippe 13' ist in dem dargestellten Bereich an der Rohroberfläche 16 verschweisst.

Fig. 3 zeigt in ihrem rechten Darstellungsbereich besagten Abschnitt 17 der Rippe 13' im bereits verschweissten Zustand. Fig. 3 lässt dabei die bereits erstarrte Schmelze 18 im Kontaktbereich 19 zwischen Rohrgrundkörper 12 und Band 13 erkennen. Die Schmelze 18 besteht anteilig aus Material sowohl des Rohrgrundkörpers 12 als auch des Bandes 13 bzw. der Rippe 13' (an deren Unterseite).

Die Rippe 13' ist hierzu im Querschnitt in etwa rechteckig ausgebildet.

Der in Fig. 3 rechtsseitig dargestellte Abschnitt 17 der Rippe 13' befindet sich in Berippungsrichtung B (als bereits festgelegter Abschnitt) weiter vorne als ein in Fig. 3 ebenfalls dargestellter Abschnitt 17'. Dieser Abschnitt 17' der Rippe 13' bzw. des Bandes 13 wird in Fig. 3 gerade in dem Kontaktbereich 19 (welcher aufgrund der geraden Rohroberfläche 16 und der geraden Seitenkante 20 der Rippe 13' im Wesentlichen L-förmig ausgebildet ist) verschweisst.

Hierzu fällt ein Faserlaserstrahl 21 eines in Fig. 3 noch nicht dargestellten Faserlasers unter einem Winkel δ, insbesondere einem geringen Winkel δ, auf den Kontaktbereich 19. Der Faserlaserstrahl 21 bestrahlt hierbei sowohl Material des Bandes 13 bzw. der Rippe 13' bzw. des Abschnittes 17' als auch Material des Rohrgrundkörpers 12, insbesondere an dessen Oberfläche 16.

Da sich der Abschnitt 17 des Bandes 13 in Berippungsrichtung B vor dem Abschnitt 17' befindet, stellt der linke Abschnitt gemäß Fig. 3 sozusagen den Zustand des Verschweissens eines Abschnittes des Bandes dar und die rechte Seite gemäß Fig. 3 dann den fertigen, angeschweissten Zustand eines Abschnittes des Bandes. Weitere Abschnitte des Bandes würden sich natürlich insbesondere in Berippungsrichtung B (und somit bereits verschweisst) mit definierter Rippensteigung anschließen.

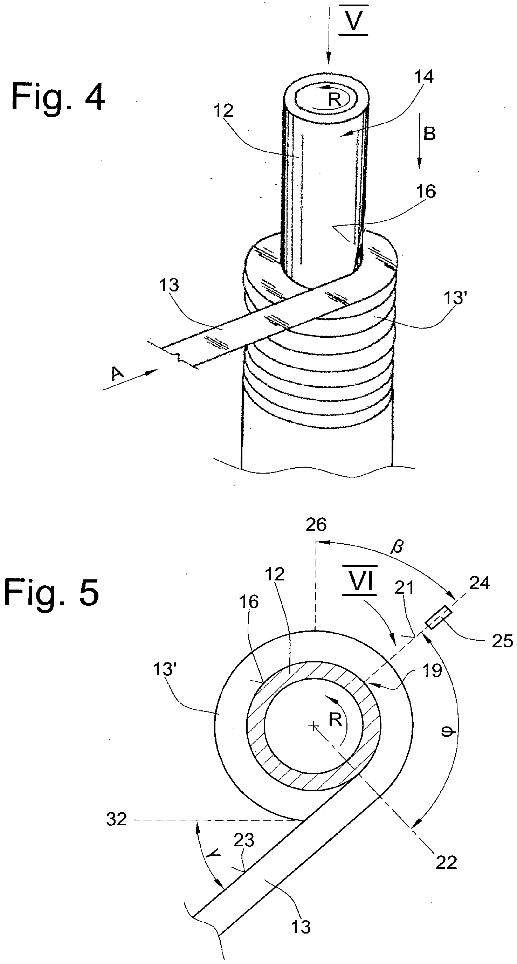

Fig. 4 verdeutlicht in einer perspektivischen, aber gleichfalls schematischen Ansicht das Bewickeln des Rohrgrundkörpers 12 mit dem Band 13. Bereits Fig. 4 ist hierbei zu entnehmen, dass das Band 13 zunächst gerade, im Wesentlichen entlang einer Abwicklungsrichtung A auf den Rohrgrundkörper 12 zuläuft und diesen dann an seiner Oberfläche 16 tangential kontaktiert. Der Rohrgrundkörper 12 ist an seinen Enden 14 und/oder 15 - wie allerdings nicht dargestellt - endseitig eingespannt, um diesen drehend in Rotationsrichtung R anzutreiben. Der Rohrgrundkörper 12 kann bei diesem Antrieb das Band 13 mitziehen und dieses, beispielsweise von einer Vorratsrolle oder einem Teller oder Bett (ebenfalls nicht dargestellt) gerichtet und unter einer definierten Zug- und Bremskraftwirkung abziehen. Zusätzlich kann auch ein Antrieb für die Vorratsrolle (beispielsweise ein Spulenantrieb) vorgesehen werden.

Aufgrund dieser Zugkraft und einer gegebenenfalls vorhandenen Vorschubbewegung des Bandes 13 wird das Band 13 an der Oberfläche 16 des Rohrgrundkörpers 12 kontinuierlich und fortschreitend beaufschlagt. Die Beaufschlagung beginnt ausweislich Fig. 5 etwa ab einem Bereich, welcher dort mit einer radialen Achse 22 gekennzeichnet ist.

Das Band 13 liegt ab diesem Bereich also mit seiner Unterseite 23 kontaktierend an der Oberseite 16 des Rohrgrundkörpers 12 an. Infolge der Rotationsbewegung in Rotationsrichtung R läuft das Band 13 sodann, die Oberfläche 16 des Rohrgrundkörpers 12 kontaktierend, über einen Winkelbereich ϕ mit dem Rohrgrundkörper 12 mit, bevor es im Bereich einer mit 24 bezeichneten radialen Achse von einem Laserstrahl 21 mit dem Rohrgrundkörper 12 verschweisst wird.

In dem dargestellten Ausführungsbeispiel beträgt der Winkel ϕ ungefähr 90 Grad. Er kann aber insbesondere zwischen etwa 30 und 120 Grad betragen. Entscheidend ist hierbei, dass das Band 13 jedenfalls über einen gewissen Winkel ϕ mitgenommen wird, um einen idealen Zeitpunkt für das Verschweissen zu erreichen.

Der Laserstrahl 21 wird von einem lediglich sehr schematisch dargestellten Faserlaser 25 erzeugt. Dieser Faserlaser 25 kann hierbei eine flexible Zuleitung vorsehen, welche eine ideale Einstellung auf den zu bestrahlenden Kontaktbereich 19 ermöglicht.

In Fig. 5 lässt sich zudem erkennen, dass der Faserlaser 25 einen gewissen Winkelversatz β zur mit 26 gekennzeichneten Mittelsenkrechten aufweist. Auch diese Einstellung ermöglicht hierbei im Wesentlichen die ideale Ausnutzung des Zeitpunktes, wie oben beschrieben. Alternativ könnte der Faserlaser auch parallel zur Mittelsenkrechten (26) linear verstellt werden (nämlich nach Art einer Parallelverschiebung).

Vorteilhafterweise kann der Faserlaser 25 hinsichtlich seines Einstrahlwinkels β einstellbar sein. Gleiches gilt für den in Fig. 3 dargestellten Einstrahlwinkel δ in der Seitenebene.

Schließlich lässt Fig. 5 noch erkennen, dass das Band 13 von unterhalb einer Waagerechten 32 in einem Winkel γ von typischerweise weniger als 45 Grad, beispielsweise 30 Grad, an den Rohrgrundkörper 12 herangeführt wird. Dies ermöglicht eine Aufbewahrung des Bandbettes oder einer Bandrolle in einer Ebene unterhalb der Aufspannebene des Rohrgrundkörpers 12, was zugtechnische Vorteile mit sich bringt.

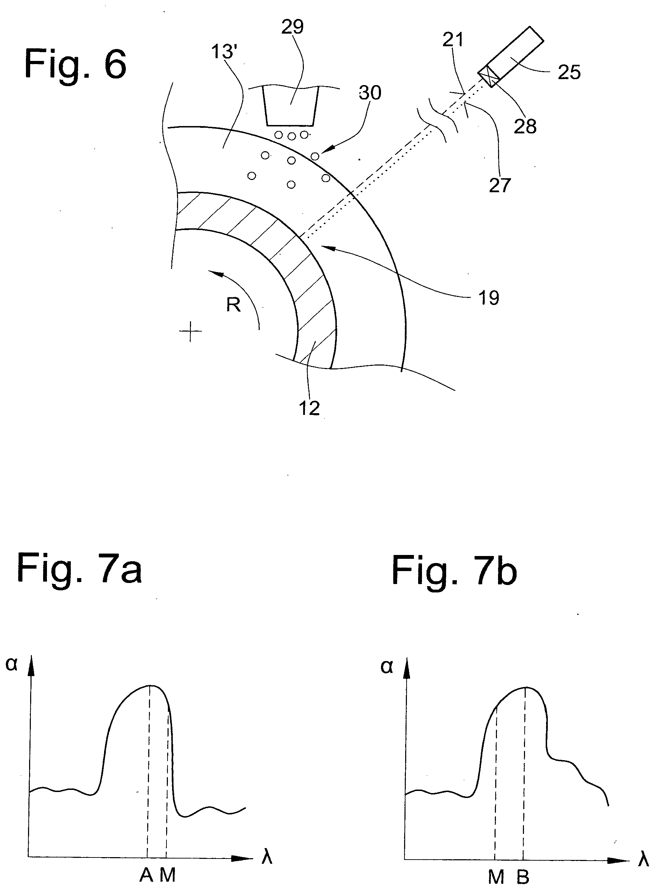

Fig. 6 stellt eine vergrößerte Darstellung des in Fig. 5 etwa mit VI gekennzeichneten Bereiches dar, also eine Darstellung im Wesentlichen des Kontaktbereiches 19 zwischen Rohrgrundkörper 12 und Rippe 13'.

Diese Figur soll insbesondere verdeutlichen, dass der Faserlaser 25 nicht nur den bereits beschriebenen (Haupt-)Laserstrahl 21 absendet, sondern gleichfalls einen als Vorstrahl 27 bezeichenbaren, zweiten Laserstrahl. Dieser zweite Laserstrahl 27, welcher in Rotationsrichtung R dem Hauptlaserstrahl 21 nachläuft und zeitlich vor diesem auf den relevanten Abschnitt des Kontaktbereiches 19 trifft, dient dabei im Wesentlichen dem Anwärmen des Kontaktbereiches 19.

Versuche der Anmelderin haben hierbei ergeben, dass der Einsatz eines derartigen Vorstrahls 27, beispielsweise durch den Einsatz eines Twin-Spot-Lasers, verbesserte Ergebnisse hinsichtlich einer kontinuierlichen, homogenen und resistenten Schweissnaht bietet. Die beiden Strahlen 21, 27 können hierbei insbesondere von demselben Faserlaser 25 bereitgestellt werden.

Der Hauptstrahl 21 und der Vorstrahl 27 können zudem auch in Axialrichtung (bezogen auf den Rohrgrundkörper) gegeneinander verstellbar sein.

Fig. 6 ist zudem zu entnehmen, dass dem Faserlaser 25 auch eine eigene Optik 28 zugeordnet sein kann, welche eine genauere Einstellung oder Fokussierung des Hauptlaserstrahls 21 und/oder des Vorstrahls 27 auf den Kontaktbereich 19 ermöglicht.

Schließlich ist Fig. 6 noch eine - dort lediglich angedeutete - Kühlgaszuführungseinheit 29 zu entnehmen Die Kühlgaszuführungseinheit 29 kann hierbei ein Kühlgas 30 in den Kontaktbereich 19 einströmen lassen (um die Umgebungsatmosphäre im Schweißbereich zu verdrängen) und somit trotz des Bandes hoher Wärmeleitfähigkeit, bzw. eines niedrigen Schmelzpunktes, insbesondere durch erzwungene Konvektion, für geeignete Arbeitsbedingungen und Schweissbedingungen sorgen.

Grundsätzlich ist es ein erfindungsgemäßes Verfahren beansprucht, ein Band eines ersten Materials an einem Rohrgrundkörper eines zweiten Materials zu befestigen. Erfindungsgemäß ist es hierzu vorgesehen, mindestens eine (oder auch mehrere) spektrale Eigenschaften dieser beiden Materialien zunächst zu beurteilen.

Beispielhaft ist dies in den Figuren 7a (für ein erstes fiktives Material) und 7b (für ein zweites fiktives Material) dargestellt: Während Fig. 7a die Entwicklung des Absorptionskoeffizienten eines ersten Rohrgrundkörpermaterials über der Wellenlänge darstellt, stellt Fig. 7b dies für ein beliebiges Bandmaterial dar. Demnach hat gemäß Fig. 7a das Rohrgrundkörpermaterial sein Maximum hinsichtlich des Absorptionskoeffizienten bei einer Wellenlänge A erreicht. Ausweislich Fig. 7b hat das Bandmaterial sein Maximum hinsichtlich des Absorptionskoeffizienten α bei einer Wellenlänge B erreicht.

Für beide Werkstoffe liegt eine Wellenlänge M allerdings noch im Wesentlichen im Hauptmaximum des Absorptionskoeffizienten bezüglich der Wellenlänge. Mit anderen Worten scheint ein Laserstrahl der Wellenlänge M geeignet zu sein, auf beide Materialien jedenfalls hinreichend einwirken zu können, so dass ein Verschweissvorgang möglich wird.

Demnach erlaubt ein Abgleich der Graphen gemäß Fig. 7a und 7b eine Feststellung, dass ein Lasertyp genutzt werden sollte, welcher im Wesentlichen einer Wellenlänge M entspricht. Gleiche Überlegungen sind selbstverständlich auch für andere Werte, wie beispielsweise den Reflexions- oder Transmissionskoeffizienten (hier sollten jedoch Maxima gerade vermieden werden), möglich. In jedem Fall können hierbei zwei unterschiedliche Werkstoffe hinsichtlich ihrer spektralen Eigenschaften abgeglichen werden und auf Basis des Abgleichs kann ein geeigneter Laser gewählt werden, welcher durch ein Einstrahlen in einen Kontaktbereich Material beider Bauteile aufschmelzen kann.

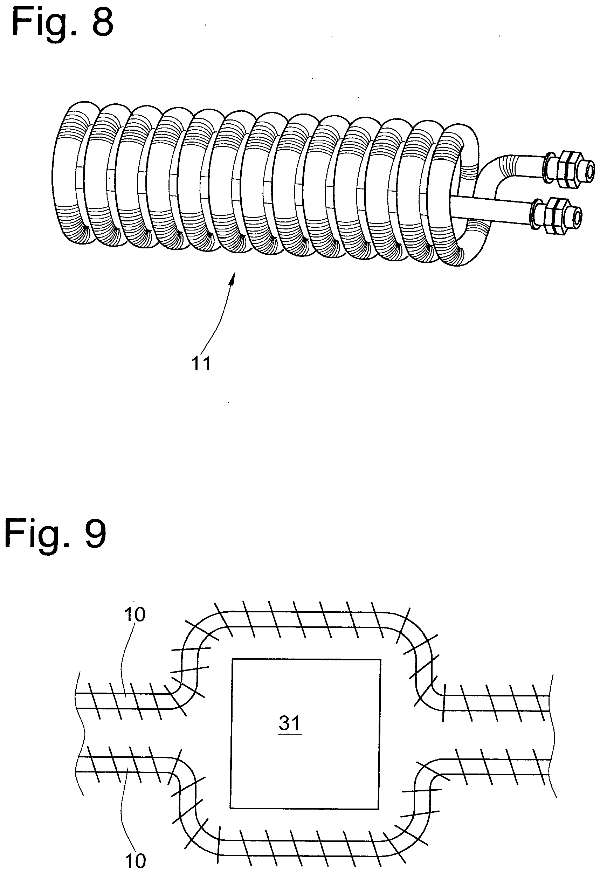

Schließlich zeigen die Figuren 8 und 9 zwei typische Beispiele für Endformen, in welche die erfindungsgemäßen Rippenrohre 10 abschließend verformt oder gebogen werden können.

So zeigt Fig. 8 eine Rippenrohrwendel 11, wie sie typischerweise in Wärmetauschern eingesetzt wird. Fig. 9 zeigt hingegen rein schematisch einen Motor 31, welcher von zwei Rippenrohren 10 umgeben ist, welche beide jeweils im Wesentlichen eine Ω-Form aufweisen. Die beiden dargestellten Rippenrohre 10 sind in Fig. 9 lediglich beispielhaft dargestellt. Tatsächlich wird der Motor 31 von sehr viel mehr Ω-förmigen Rippenrohren umgeben sein. In diesem Sinne handelt es sich bei der Erfindung gemäß Fig. 9 im Wesentlichen etwa um eine Querschnittsdarstellung. Die Rippenrohre 10 können gemäß Fig. 9 insbesondere mit einer Kühlflüssigkeit durchflossen werden, um eine Kühlung des Motors 31 zu ermöglichen.

## Patentansprüche

1. Verfahren zur Herstellung eines Rippenrohres (10), bei welchem ein Rohrgrundkörper (12) auf seiner Außenseite (16), insbesondere wendelförmig, mit einem Band (13) berippt wird, wozu das Band (13) an dem Rohrgrundkörper (12) unter Einsatz eines Laserstrahls (21) befestigt wird,
**gekennzeichnet durch** die Schritte:
• Bereitstellen eines Rohrgrundkörpers (12) aus einem ersten Werkstoff sowie eines Bandes (13) aus einem zweiten, anderen Werkstoff,
• Abgleich mindestens einer spektralen Eigenschaft, beispielsweise des Absorptionskoeffizienten (α), der beiden unterschiedlichen Werkstoffe,
• Auswahl eines Lasertyps einer geeigneten Wellenlänge (λ) unter Berücksichtigung des vorgenommenen Abgleichs,
• Einstrahlen eines von einem Laser des ausgewählten Typs erzeugten Laserstrahls (21) in den Kontaktbereich (19) von Rohrgrundkörper (12) und Band (13), derart, dass zum Verschweißen sowohl dem Kontaktbereich (19) zugeordnetes Rohrgrundkörpermaterial als auch dem Kontaktbereich (19) zugeordnetes Bandmaterial von dem Laserstrahl bestrahlt und aufgeschmolzen wird.

2. Verfahren nach Anspruch 1,
**gekennzeichnet durch** die Schritte:
• Bereitstellen des Rohrgrundkörpers (12), insbesondere aus Kupfer oder Aluminium, sowie des Bandes (13) aus Kupfer oder Aluminium,
• Einsetzen eines Faserlasers (25) zur Erzeugung des Laserstrahls (21),
• Einstrahlen des von dem Faserlaser (25) erzeugten Laserstrahls (21) in den Kontaktbereich (19) von Rohrgrundkörper (12) und dem aus Kupfer oder Aluminium bestehenden Band (13), derart, dass zum Verschweißen sowohl dem Kontaktbereich (19) zugeordnetes Rohrgrundkörpermaterial als auch dem Kontaktbereich (19) zugeordnetes Bandmaterial von dem Laserstrahl (21) bestrahlt und aufgeschmolzen wird.

3. Verfahren nach einem der vorangegangenen Ansprüche, **dadurch gekennzeichnet, dass** das Band (13) streifenartig und im Querschnitt, insbesondere durchgängig, rechteckig bzw. I-förmig ausgebildet ist.

4. Verfahren nach einem der vorangegangenen Ansprüche, **dadurch gekennzeichnet, dass** folgender Schritt vorgesehen ist:
• Einstrahlen eines, insbesondere auch von dem Faserlaser (25) erzeugten, Vorstrahls (27) in den Kontaktbereich (19), insbesondere zum Anwärmen des Kontaktbereichs (19) vor der Bestrahlung durch den Laserstrahl (21).

5. Verfahren nach einem der vorangegangenen Ansprüche, **dadurch gekennzeichnet, dass** folgender Schritt vorgesehen ist:
• Zuleiten eines Kühlgases (30) zu dem bestrahlten Kontaktbereich (19), insbesondere zur Kühlung des Kupfers oder Aluminiums durch erzwungene Konvektion.

6. Verfahren nach einem der vorangegangenen Ansprüche, **dadurch gekennzeichnet, dass** der Schweißvorgang ohne einen Schweißzusatzwerkstoff, wie beispielsweise Schweißdraht, erfolgt und/ oder eine durchgängige Schweißnaht zwischen Rohrgrundkörper (12) und Band (13) erzeugt wird.

7. Verfahren nach einem der vorangegangenen Ansprüche, **dadurch gekennzeichnet, dass** das Band (13) vor der Bestrahlung durch den Laserstrahl (21) über einen gewissen Umfangswinkel (ϕ), insbesondere von mindestens 30 Grad, vorzugsweise mindestens 70 Grad, mit dem, insbesondere rotierenden, Rohrgrundkörper (12) in Kontakt steht, vorzugsweise unter Zug.

8. Verfahren nach einem der vorangegangenen Ansprüche, **dadurch gekennzeichnet, dass** abschließend folgender Schritt vorgesehen ist:
• Verformen des Rohrgrundkörpers (12) mit daran verschweißtem Band (13), insbesondere im Wesentlichen hin zu einer Wendelform oder einer Ω-Form.

9. Rippenrohr (10), insbesondere hergestellt nach einem der voranstehenden Ansprüche, umfassend einen Rohrgrundkörper (12), welcher auf seiner Außenseite, insbesondere wendelförmig, mit einem Band (13) berippt ist, wobei das Band (13) aus Kupfer oder Aluminium besteht, und wobei der Rohrgrundkörper (12) aus anderem Material, beispielsweise Edelstahl, C-Stahl oder Ähnlichem, besteht, **dadurch gekennzeichnet, dass** sich eine erstarrte Schmelze (18) im Kontaktbereich (19) zwischen dem Rohrgrundkörper (12) und Band (13) befindet, wobei diese erstarrte Schmelze anteilig aus Material sowohl des Rohrgrundkörpers (12) als auch des Bandes (13), an dessen Unterseite, besteht.

## Claims

1. Method for making a finned tube (10), in which a tube base body (12) is finned on its outside (16), in particular helically, with a band (13), whereby the band (13) is fixed to the tube base body (12) using a laser beam (21),
**characterised by** the steps:
• providing a tube base body (12) made of a first material and a band (13) made of a second, different material,
• comparison of at least one spectral property, for example the absorption coefficient (α), of the two different materials,
• selecting a type of laser of a suitable wavelength (λ) taking into account the comparison made,
• radiating a laser beam (21) produced by a laser of the type selected into the contact area (19) of the tube base body (12) and the band (13), such that for welding, both the tube base body material assigned to the contact area (19) and also the band material assigned to the contact area (19) are irradiated and melted by the laser beam.

2. Method according to claim 1,
**characterised by** the steps:
• providing the tube base body (12), in particular made of copper or aluminium, and also the band (13) made of copper or aluminium,
• using a fibre laser (25) to produce the laser beam (21),
• radiating the laser beam (21) produced by the fibre laser (25) into the contact area (19) of the tube base body (12) and the band (13) made of copper or aluminium, such that for welding, both the tube base body material assigned to the contact area (19) and also the band material assigned to the contact area (19) are irradiated and melted by the laser beam (21).

3. Method according to any of the preceding claims,
**characterised in that** the band (13) is formed strip-like and in cross-section, in particular continuous, rectangular or 1-shaped.

4. Method according to any of the preceding claims,
**characterised in that** the following step is provided:
• radiating a pre-beam (27), in particular also produced by the fibre laser (25), into the contact area (19), in particular for heating the contact area (19) before irradiation by the laser beam (21).

5. Method according to any of the preceding claims,
**characterised in that** the following step is provided:
• supplying a cooling gas (30) to the irradiated contact area (19), in particular for cooling the copper or aluminium by forced convection.

6. Method according to any of the preceding claims,
**characterised in that** the welding process takes place without a welding filler material, such as for example welding wire, and/or a continuous weld seam is produced between the tube base body (12) and the band (13).

7. Method according to any of the preceding claims,
**characterised in that** the band (13), before irradiation by the laser beam (21), over a certain circumferential angle (ϕ), in particular of at least 30 degrees, preferably at least 70 degrees, is in contact with the, in particular rotating, tube base body (12), preferably under tension.

8. Method according to any of the preceding claims,
**characterised in that** finally the following step is provided:
• deforming the tube base body (12) with the band (13) welded to it, in particular substantially to a helical shape or a Ω shape.

9. Finned tube (10), in particular made according to any of the preceding claims, comprising a tube base body (12), which is finned on its outside, in particular helically, with a band (13), wherein the band (13) is made of copper or aluminium, and wherein the tube base body (12) is made of a different material, for example stainless steel, carbon steel or the like, **characterised in that** there is a solidified melt (18) in the contact area (19) between the tube base body (12) and the band (13), wherein this solidified melt consists proportionately of material both of the tube base body (12) and also of the band (13), on its underside.

## Revendications

1. Procédé pour fabriquer un tuyau à ailettes (10), selon lequel un corps de base de tuyau (12) est nervuré, en particulier en forme de spirale, sur sa face extérieure (16) avec un ruban (13), le ruban (13) étant fixé sur le corps de base de tuyau (12) au moyen d'un faisceau laser,
**caractérisé par** les étapes suivantes :
• préparation d'un corps de base de tuyau (12) fait d'un premier matériau ainsi que d'un ruban fait d'un deuxième matériau différent,
• comparaison d'au moins une caractéristique spectrale, par exemple du coefficient d'absorption (α) des deux matériaux différents,
• choix d'un type de laser d'une longueur d'onde appropriée (λ) compte tenu de la comparaison effectuée,
• projection d'un faisceau laser (21) généré par un laser du type choisi dans la région de contact (19) du corps de base de tuyau (12) et du ruban (13), de sorte que, pour le soudage, aussi bien le matériau du corps de base de tuyau associé à la région de contact (19) que le matériau du ruban associé à la région de contact (19) sont irradiés et fondus.

2. Procédé selon la revendication 1,
**caractérisé par** les étapes suivantes :
• préparation du corps de base de tuyau (12), en particulier en cuivre ou en aluminium, ainsi que du ruban (13) en cuivre ou en aluminium,
• utilisation d'un laser à fibre (25) pour générer le faisceau laser (21),
• projection du faisceau laser (21) généré par le laser à fibre (25) dans la région de contact (19) du corps de base de tuyau (12) et du ruban (13) en cuivre ou en aluminium, de sorte que, pour le soudage, aussi bien le matériau du corps de base de tuyau associé à la région de contact (19) que le matériau du ruban associé à la région de contact (19) sont irradiés et fondus par le faisceau laser (21).

3. Procédé selon une des revendications précédentes, **caractérisé en ce que** le ruban (13) se présente comme une bande avec une section transversale, en particulier continue, rectangulaire ou en forme de I.

4. Procédé selon une des revendications précédentes, **caractérisé en ce que** l'étape suivante est prévue :
• projection d'un préfaisceau laser (27) généré en particulier également par le laser à fibre (25) dans la région de contact (19), en particulier pour chauffer la région de contact (19) avant la projection du faisceau laser (21).

5. Procédé selon une des revendications précédentes, **caractérisé en ce que** l'étape suivante est prévue :
• acheminement d'un gaz de refroidissement (30) jusqu'à la région de contact (19) irradiée, en particulier pour refroidir le cuivre ou l'aluminium par une convection forcée.

6. Procédé selon une des revendications précédentes, **caractérisé en ce que** l'opération de soudage a lieu sans métal d'apport, tel que par exemple un fil de soudage, et/ou qu'un cordon de soudure continu est réalisé entre le corps de base de tuyau (12) et le ruban (13).

7. Procédé selon une des revendications précédentes, **caractérisé en ce qu'**avant l'irradiation par le faisceau laser (21), le ruban (13) est en contact, de préférence sous tension, avec le corps de base de tuyau (12), en particulier en rotation, sur un certain angle circonférentiel (ϕ), en particulier d'au moins 30 degrés, de préférence d'au moins 70 degrés.

8. Procédé selon une des revendications précédentes, **caractérisé en ce que** l'étape finale suivante est prévue :
• déformation du corps de base de tuyau (12) avec le ruban (13) soudé dessus, en particulier sensiblement en forme de spirale ou en forme de Ω.

9. Tuyau à ailettes (10), fabriqué en particulier selon une des revendications précédentes, comprenant corps de base de tuyau (12) qui est nervuré, en particulier en forme de spirale, sur sa face extérieure avec un ruban (13), le ruban (13) étant en cuivre ou en aluminium et le corps de base de tuyau (12) étant dans un autre matériau, par exemple de l'acier inoxydable, de l'acier C ou autre, **caractérisé en ce qu'**une masse fondue solidifiée (18) se trouve dans la région de contact (19) entre le corps de base de tuyau (12) et le ruban (13), cette masse fondue solidifiée étant constituée proportionnellement aussi bien du matériau du corps de base de tuyau (12) que de celui du ruban (13) sur sa face inférieure.
